**Europäisches Patentamt**

**European Patent Office.**

**Office européen des brevets**

(19)

(11) Veröffentlichungsnummer: **0 315 797**
**B1**

(12) # EUROPÄISCHE PATENTSCHRIFT

(45) Veröffentlichungstag der Patentschrift:
**22.08.90**

(51) Int. Cl.⁵: **F16K 15/04**, F16K 27/02

(21) Anmeldenummer: **88117245.6**

(22) Anmeldetag: **17.10.88**

(54) Rückschlagventil.

(30) Priorität: **12.11.87 CH 4411/87**

(43) Veröffentlichungstag der Anmeldung:
**17.05.89 Patentblatt 89/20**

(45) Bekanntmachung des Hinweises auf die Patenterteilung:
**22.08.90 Patentblatt 90/34**

(84) Benannte Vertragsstaaten:
**AT BE DE ES FR GB IT LU NL SE**

(56) Entgegenhaltungen:
**AU-A- 421 854**
**DE-A- 3 003 480**
**GB-A- 1 260 802**
**US-A- 3 055 391**

(73) Patentinhaber: **GEORG FISCHER AKTIENGESELLSCHAFT, Mühlentalstrasse 105, CH-8201 Schaffhausen(CH)**

(72) Erfinder: **Nietlisbach, Hansruedi, Bernstrasse 107, CH-4852 Rothrist(CH)**

## Beschreibung

Die Erfindung betrifft ein Rückschlagventil, wie es im Oberbegriff von Anspruch 1 gekennzeichnet ist.

Derartige Rückschlagventile sind aus der DE-A 3 003 480 bekannt.

Aufgabe der vorliegenden Erfindung ist die Schaffung eines Rückschalgventils der eingangs genannten Art, bei welchem auch bei höheren Durchflussgeschwindigkeiten Turbulenzen und somit Schläge des Verschlusskörpers vermieden werden.

Erfindungsgemäss wird diese Aufgabe durch die kennzeichnenden Merkmale von Anspruch 1 gelöst.

Besonders vorteilhafte Ausgestaltungen der Erfindung sind in den abhängigen Ansprüchen gekennzeichnet.

Durch die erfindungsgemässe Ausbildung des Durchflusskanals werden die Strömungsverhältnisse verbessert, wodurch Turbulenzen auch bei höheren Durchflussgeschwindigkeiten vermieden werden.

Dadurch werden Beschädigungen am Ventil und Partikel im Medium vermieden, wodurch eine dauerhafte Betriebssicherheit des Ventils gewährleistet wird.

Das Rückschlagventil ist in den beiliegenden Zeichnungen beispielsweise dargestellt und nachfolgend beschrieben. Es zeigen:

Fig. 1 einen Längsschnitt eines bekannten Rückschlagventiles

Fig. 2 einen Querschnitt entlang der Linie II-II von Fig. 1 und

Fig. 3 einen Längsschnitt einer erfindungsgemäßen Ausführung des Rückschlagventils

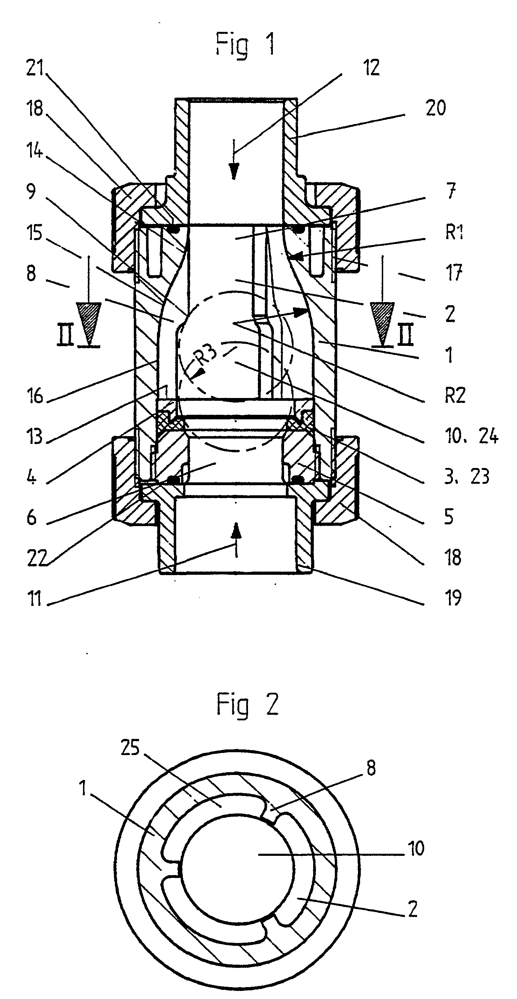

Das in den Fig. 1 und 2 dargestellte bekannte Rückschlagventil weist einen Ventilkörper 1 mit einem Durchflusskanal 2 auf.

An einer Seite des Durchflusskanals 2 ist eine Dichtpartie 3 mit einer Dichtung 23 angeordnet, welche zwischen einem Abstützring 4 und einem in den Ventilkörper 1 eingeschraubten Einschraubteil 5 fest eingespannt ist. Das Einschraubteil 5 weist eine Eintrittsöffnung 6 für das Medium auf, welche vorzugsweise den gleichen Querschnitt aufweist, wie die auf dem gegenüberliegenden Ende des Gehäuses 1 angeordnete Austritts-Oeffnung 7 des Durchflusskanals 2.

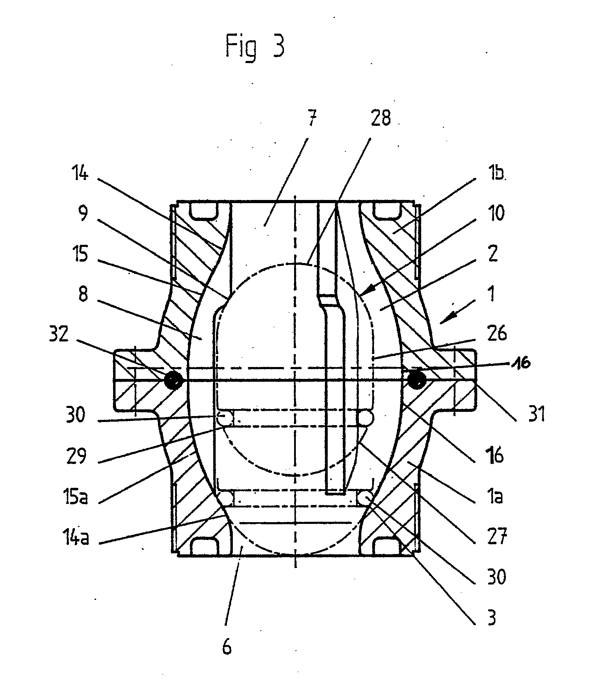

Im Durchflusskanal 2 sind am Innenumfang vorzugsweise drei Führungsrippen 8 gleichmässig verteilt angeordnet, welche eine Anschlagfläche 9 aufweisen. Zwischen den Führungsrippen 8 ist ein als Kugel 24 ausgebildeter Verschlusskörper 10 (strichpunktiert dargestellt) verschiebbar und geführt angeordnet, welcher beim normalen Mediendurchfluss in Richtung des Pfeiles 11 an den Anschlagflächen 9 anliegt. Bei einem Rückfluss des Mediums gemäss Pfeil 12 wird der Verschlusskörper 10 durch den Mediendruck gegen die Dichtung 23 gedrückt, so dass der Rückfluss gesperrt wird. Die Führungsrippen 8 weisen eine Stirnfläche 13 auf, an welcher der Abstützring 4 anliegt. Der Verschlusskörper 10 kann, wie in Fig. 3 dargestellt, auch bei dieser Ausführungsvariante länglich ausgebildet sein.

Die Innenkontur des Durchflusskanals 2 ist strömungsgünstig ausgebildet. Ausgehend von der Austrittsöffnung 7 erweitert sich der Querschnitt in einem Abschnitt 14 bogenförmig mit einem Radius R1 und geht dann anschliessend absatzlos durch einen entgegengesetzten bogenförmigen Abschnitt 15 mit einem Radius R2 in einen zylindrischen Abschnitt 16 über, welcher im Querschnitt grösser ist als der der Austrittsöffnung 7. Der ringförmige Durchflussquerschnitt 25 zwischen den Führungsrippen 8 und dem Verschlusskörper 10 (s. Fig. 2) ist dabei etwa gleich gross wie der Querschnitt der Eintritts- bzw. Austrittsöffnung 6 bzw. 7.

Die Radien R1 und R2 der bogenförmigen Abschnitte 14, 15 sind vorteilhafterweise grösser als der Radius R3 des als Kugel ausgebildeten Verschlusskörpers 10.

Das Ventilgehäuse 1 ist an beiden Enden mit Aussengewinden 17 versehen, auf welche Bundmuttern 18 aufschraubbar sind.

Mittels den Bundmuttern 18 kann eine Bundbuchse 19 oder ein Bundstutzen 20 gegen die mit einer Dichtung 21 versehenen Endstirnflächen 22 des Ventilgehäuses 1 gedrückt und am Ventilgehäuse 1 dichtend befestigt werden.

Dadurch kann das Rückschlagventil zwischen verlegten Rohrleitungen radial ein- und ausgebaut werden.

Fig. 3 zeigt eine erfindungsgemäße Ausführung des Rückschlagventils mit einem aus zwei Teilen 1a und 1b bestehenden Ventilkörper 1, mit einem Durchflusskanal 2, welcher auch auf der Seite der Dichtpartie 3 ausgehend von der Eintrittsöffnung 6 sich in einem Abschnitt 14a bogenförmig im Querschnitt erweitert und anschliessend absatzlos durch einen bogenförmigen Abschnitt 15a in den zylindrischen Abschnitt 16 übergeht. Von der Austrittsöffnung 7 ausgehend weist der Durchflusskanal 2 die, wie zu Fig. 1 beschriebenen bogenförmigen Abschnitte 14 und 15 auf, so dass der gesamt Durchflusskanal 2 strömungsgünstig ausgebildet ist. Im Durchflusskanal 2 sind am Innenumfang ebenfalls drei Führungsrippen 8 angeordnet, welche eine Anschlagfläche 9 für den strichpunktiert dargestellten Verschlusskörper 10 aufweisen.

Der Verschlusskörper 10 ist länglich ausgebildet und weist einen zylinderförmigen Mittelteil 26 und beidseits je ein halbkugelförmiges Endteil 27, 28 auf. Das eine Endteil 27 weist eine in einer Nute 29 angeordnete Ringdichtung 30 auf, welche in Schliessstellung an der Dichtpartie 3 des Gehäuses 1 anliegt.

Die Trennebene 31 der beiden Teile 1a, 1b verläuft quer durch den zylindrischen Abschnitt 16 des Durchflusskanals 2. In der Trennebene 31 ist eine Dichtung 32 angeordnet, wobei die beiden Teile 1a, 1b nach dem Einschieben des Verschlusskörpers 10 in den Durchflusskanal 2 mittels z.B. Schrauben fest und dichtend miteinander verbunden werden.

Die Teile des Rückschlagventils sind vorzugsweise aus einem Kunststoff wie z.B. Polyvinylchlorid hergestellt, wodurch es für aggressive Medien verwendbar ist. Selbstverständlich kann das Rückschlagventil auch aus anderen Materialien wie z.B. Stahl, Kupfer, Messing usw. hergestellt sein.

**Patentansprüche**

1. Rückschlagventil mit einem in einem Durchflusskanal eines Ventilkörpers angeordneten, durch das Durchflussmedium verschiebbaren und in Schliessstellung an einer Dichtpartie des Ventilkörpers anliegenden Verschlusskörper, welcher durch im Durchflusskanal angeordneten und Anschlagflächen aufweisenden Führungsrippen geführt ist, wobei der Durchflusskanal (2) auf der der Dichtpartie (3) gegenüberliegenden Seite ausgehend von der Austrittsöffnung (7) sich in einem Abschnitt (14) bogenförmig im Querschnitt erweitert und anschliessend absatzlos durch einen entgegengesetzten, bogenförmigen Abschnitt (15) in einen gegenüber der Austrittsöffnung (7) im Querschnitt vergrösserten, zylindrischen Abschnitt (16) übergeht, dadurch gekennzeichnet, dass der Durchflusskanal (2) auch auf der Seite der Dichtpartie (3), ausgehend von der Eintrittsöffnung (6), sich in einem Abschnitt (14a) bogenförmig im Querschnitt erweitert und anschliessend absatzlos durch einen bogenförmigen Abschnitt (15a) in einen zylindrischen Abschnitt (16) übergeht, und dass der Verschlusskörper (10) länglich ausgebildet einen zylindrischen Mittelteil (26) und beidseits je ein halbkugelförmiges Endteil (27, 28) aufweist.

2. Rückschlagventil nach Anspruch 1, dadurch gekennzeichnet, dass der Ventilkörper (1) zweiteilig ausgebildet ist, wobei die Trennebene (31) quer zur zylindrischen Partie (16) des Durchflusskanals verläuft.

3. Rückschlagventil nach Anspruch 1 oder 2, dadurch gekennzeichnet, dass der Verschlusskörper (10) eine Dichtung (30) aufweist, welche in Schliessstellung an der Dichtpartie (3) des Ventilkörpers (1) anliegt.

**Claims**

1. Non-return valve with a plug located in a flow channel of a valve body and can be shifted through the flow medium and lie up against sealing section of the valve body when in the closed position, which is guided through guide ribs with stop faces located in the flow channel, whereby one section (14) of the flow channel (2) widens out to produce an arc-shaped cross-section starting from the outlet hole (7) on the opposite side of the sealing section (3) and then transforms smoothly into a cylindrical section (16) with an enlarged cross-section compared to the outlet hole (7) via an arc-shaped section (15), characterised in that a section (14a) of the flow channel (2) also widens into an arc-shaped cross-shaped on the side of the sealing section (3) starting from the inlet hole (6) and then transforms smoothly into a cylindrical section (16) via an arc-shaped section (15a), and that the valve plug (10) is made with an elongated shape with a cylindrical centre section (26) and a hemispherical end section (27, 28) on each side.

2. Non-return valve as in claim 1, characterised in that the valve body (1) is designed in two parts, where the separating plane (31) runs transverse to the cylindrical section (16) of the flow channel.

3. Non-return valve as in claim 1 or 2, characterised in that the valve plug (10) has a seal (30), which is up against the sealing section (3) of the valve body (1) when in the closed condition.

**Revendications**

1. Valve ou clapet anti-retour comportant un corps de fermeture disposé dans un canal de passage d'un corps de valve, susceptible d'être déplacé par le fluide en cours d'écoulement et d'être appliqué en position de fermeture contre une partie d'étanchéité du corps de valve, le corps de fermeture étant guidé par des nervures de guidage disposées dans le canal de passage et présentant des surfaces de butée, la section du canal de passage (2) s'élargissant de façon courbe du côté opposé à la partie d'étanchéité (3), à partir de l'orifice de sortie (7) pour former une partie (14), puis le canal d'écoulement se transformant sans décrochement, en passant par une partie courbe opposée (15), en une partie cylindrique (16) dont la section est agrandie par rapport à l'orifice de sortie (7), caractérisée en ce que la section du canal de passage (2) s'élargit également de façon courbe du côté de la partie d'étanchéité (3), en partant de l'orifice d'entrée (6), pour former une partie (14a), puis que le canal de passage (2) se transforme, sans décrochement, en une partie cylindrique (16), en passant par une partie courbe (15a) et en ce que le corps de fermeture (10) présente une forme oblongue et une partie médiane cylindrique (26) et de chaque côté une partie terminale hémisphérique (27, 28).

2. Valve ou clapet anti-retour selon la revendication 1, caractérisée en ce que le corps de valve (1) est constitué de deux parties, le plan de séparation (31) étant disposé transversalement à la partie cylindrique (16) du canal de passage.

3. Valve ou clapet anti-retour selon la revendication 1 ou 2, caractérisée en ce que le corps de fermeture (10) présente un joint d'étanchéité (30) qui, en position de fermeture, s'appuie contre la partie d'étanchéité (3) du corps de valve (1).

EP 0 315 797 B1

Fig 1

Fig 2

EP 0 315 797 B1

## Fig 3